# EUROPEAN PATENT APPLICATION

(11) **EP 1 367 371 A1**
(43) Date of publication of application: **03.12.2003**
(21) Application number: 02447100.5
(22) Date of filing: 30.05.2002
(51) Int. Cl.: G01F 23/32

(54) **Adjustable gauge for measuring the level of a liquid medium in a storage tank**

(71) Applicant: Prakto-Theo Laureys N.V., 9280 Lebbeke (BE)
(72) Inventor: Laureys, Freddy, 9200 Dendermonde (BE)
(74) Representative: Luys, Marie-José A.H.

(57) **Abstract**

An adjustable gauge (1) for measuring the level of a liquid medium in a storage tank, comprising level indicating means (2) coupled to a first gear (3) and a float arm (5) coupled to a second gear (4), the first and second gears (3, 4) engaging each other perpendicularly, a float (6) being mounted on the float arm (5) of which the position with respect to the second gear (4) is adjustable, the level measurement being based on a rotation of the first gear (3) in response to a rotation of the second gear (4) following an angular displacement of the float arm (5), the first gear (3) being located adjacent the level indicating means (2) and the gauge (1) comprising means (7, 8, 71, 81) for disengaging and re-engaging the first and second gears (3, 4).

## Description

The present invention relates to an adjustable gauge according to the preamble of the first claim.

An adjustable gauge is for example known from US-A-5,072,618, which discloses an adjustable gauge comprising a level indicating needle which is mechanically coupled to a first gear via a drive shaft and a float which is mechanically coupled to a second gear via a float arm. The first and second gears engage each other perpendicularly, so that angular movement of the float arm involves rotational movement of the level indicating needle. The float is removably mounted on the float arm, by which an adjustment of the length of the float arm to the dimensions of the storage tank is enabled.

An adjustable gauge is further known from WO-A-00/02015, which discloses an adjustable gauge which is adapted for use in both horizontally and vertically oriented cylindrical storage tanks. The possibility of horizontal and vertical mounting is achieved in that, for either orientation of the tank, the gauge comprises separate means for indicating the level in the tank. The gauge is also adjustable to the dimensions of the tank in that a range of float arms of different lengths is provided.

The adjustable gauges known from US-A-5,072,618 and WO-A-00/02015 however have the disadvantage that the gauges are suitable for use in only a limited range of storage tanks.

It is an aim of the present invention to provide an adjustable gauge which is adaptable for use with a wider range of storage tanks.

This aim is achieved according to the invention with an adjustable gauge showing the technical characteristics of the characterising part of the first claim.

The adjustable gauge according to the invention comprises level indicating means coupled to a first gear and a float arm coupled to a second gear. The first and second gears engage each other perpendicularly. The measurement of the level is based on a rotation of the first gear in response to a rotation of the second gear following an angular displacement of the float arm. A float, which is provided for floating on the level of the liquid medium in the storage tank, is mounted in such a way on the float arm, that its position with respect to the second gear is adjustable. In this way it is achieved that the gauge of the invention can be adjusted to the dimensions of the storage tank in which it is to be installed.

In the prior art gauges, the first gear is mounted on a substantial distance from the level indicating means, which distance is defined by a support arm. As a consequence, when such a prior art gauge is mounted in a storage tank, the first gear is located on a substantial distance from the wall of the tank. In the prior art description of WO-A-00/02015, it is mentioned that the length of this support arm should be carefully chosen in function of the dimensions of the storage tank. According to WO-A-00/02015, the support arm may not be too short, as this would involve a longer float arm for enabling measurability of the lower levels of liquid in the tank. The increased length of the float arm would lead to risks of damage by the float arm striking the wall of the tank during installation of the gauge, which is mostly a screwing operation. On the other hand, the length of the support arm may not be too long, as this would disable measurement of the high liquid levels. As a result, the length of the support arm puts restrictions on the possible lengths for the float arm and, as a consequence, limits the range of storage tanks with which a given gauge is usable.

In the gauge of the invention, the first gear is located adjacent the level indicating means. In other words, a support arm is absent in the gauge of the invention. Surprisingly, the absence of the support arm removes the restrictions on the possible lengths of the float arm. By locating the first gear adjacent the level indicating means, the distance between the second gear and the bottom of the tank becomes longer. As a result, the float arm needs to be longer as compared to the prior art gauges, in order to ensure measurability of the lower levels of liquid medium in the tank. However, contrary to what is disclosed in WO-A-00/02015, the increased length of the float arm involves little or no risk of damage to the float arm in case the gauge of the invention is installed in a tank by a screwing operation. The reason is that because of the substantially longer length of the float arm with respect to the prior art gauges, the risk of swinging of the float arm during installation is reduced. It has been found that substantially no risk of damaging the float arm during installation is present with the gauge of the invention. As there is substantially no restriction on the length of the float arm and this length is furthermore adjustable to the dimensions of the tank, the gauge of the invention is suitable for a wider range of storage tanks than the prior art gauges. Furthermore, the gauge of the invention has a simpler construction with respect to the prior art by the absence of the support arm.

Furthermore the gauge of the invention comprises means for disengaging an re-engaging the first and second gears. In this way, the initial position of the second gear with respect to the first gear and, as a result, the initial angle of the float arm with respect to the level indicating means can be selected prior to instalment of the gauge. In other words, the angles at which the gauge will, after its instalment, indicate the high and low levels are selectable. As a result, the gauge of the invention can be installed in substantially any angle with respect to the horizontal plane, which can further increase the range of storage tanks for which the gauge of the invention is suitable.

Preferably, the means for disengaging an re-engaging the first and second gears comprise a removable shaft on which the second gear is rotatably mounted. This shaft is removably fixable to a holder, which holds the first and second gears. As a result, the second gear can be disengaged from the first gear, the angle of the float arm can be adjusted and then the second gear can be re-engaged with the first gear by replacing the shaft.

In the prior art gauges, the second gear is fixed on a shaft, which is rotatably mounted on the holder. As is common in such a construction, the portion of the holder which contacts the rotatable shaft is relatively thin, in order to reduce the amount of material used for constructing the holder and hence its cost. The thinness of the holder however implies that there is only a small contact surface between the rotatable shaft and the holder. Upon rotation of the shaft in the holder, friction occurs and the shaft and the holder wear off, so that after a certain amount of time the float arm may become disconnected from the holder and the gauge may become unusable. In the gauge of the invention, the shaft is fixed on the holder and the second gear, to which the float arm is connected, rotates on the shaft. The contact surface between the shaft and the second gear is larger than the contact surface between the shaft and the holder, so that the wear occurring during operation is spread over a larger surface. As a result, the life of the gauge of the invention may be increased.

In a preferred embodiment of the gauge of the invention, the float is movably mounted on the float arm and the float arm is constructed in a cuttable material, such as for example a plastic material. In this way, the position of the float with respect to the second gear can be adjusted to the dimensions of the tank in which the gauge is to be mounted by simply moving the float on the float arm and subsequently cutting off the excess length of the float arm.

The gear ratio of the second gear with respect to the first gear which is preferably larger than 1 and more preferably about 25/7. In this way an angular displacement of the float arm causes a larger angular displacement of the level indicating means, so that the sensitivity of the gauge can be increased.

In a preferred embodiment of the gauge of the invention, the level indicating means comprise a magnet which is mechanically coupled to the first gear and a needle which is magnetically coupled to the magnet. By the magnetic coupling, the needle rotates with the float arm. The magnetic coupling has the advantage that a mechanical coupling of the needle, which becomes located outside the tank, and the float arm, which becomes located inside the tank, can be avoided, which can ensure a fluid-tight mounting of the gauge in the tank. The level indicating means may however also be any other level indicating means known to the person skilled in the art, such as for example electronic indicating means, for example comprising a transmitter on the gauge for transmitting a signal responsive of the level in the tank and a receiver on for example a dashboard of a vehicle for indicating the level to a driver.

All interior parts of the gauge of the invention - namely the first gear, the second gear, the float arm, the removable shaft on which the second gear is mounted and the holder for holding the first and second gears - are preferably constructed in a plastic material. This can reduce the construction cost of the gauge of the invention. The float arm is preferably integrally moulded with the second gear, which can further simplify the construction of the gauge and reduce its construction cost. The interior parts of the gauge of the invention may however also be constructed in any other material known to the person skilled in the art.

The invention will be further elucidated by means of the following description and the appended figures.

Figure 1 shows a longitudinal cross section of the gauge of the invention, in a plane parallel to the second gear which is connected to the float arm.

Figure 2 shows a top view of the preferred level indicating means of the gauge of the invention.

Figure 3 shows a longitudinal cross section of the gauge of the invention, in a plane perpendicular to the second gear which is connected to the float arm.

Figure 4 shows the gauge of the invention mounted in a tank of relatively small diameter, the gauge being mounted in an angle with respect to the horizontal plane.

Figure 5 shows the gauge of the invention mounted in a tank of relatively small diameter, the gauge being mounted parallel to the horizontal plane.

Figure 6 shows the gauge of the invention mounted in a tank of relatively large diameter, the gauge being mounted in an angle with respect to the horizontal plane.

Figure 7 shows the gauge of the invention mounted in the top wall of a tank, substantially perpendicular to the horizontal plane.

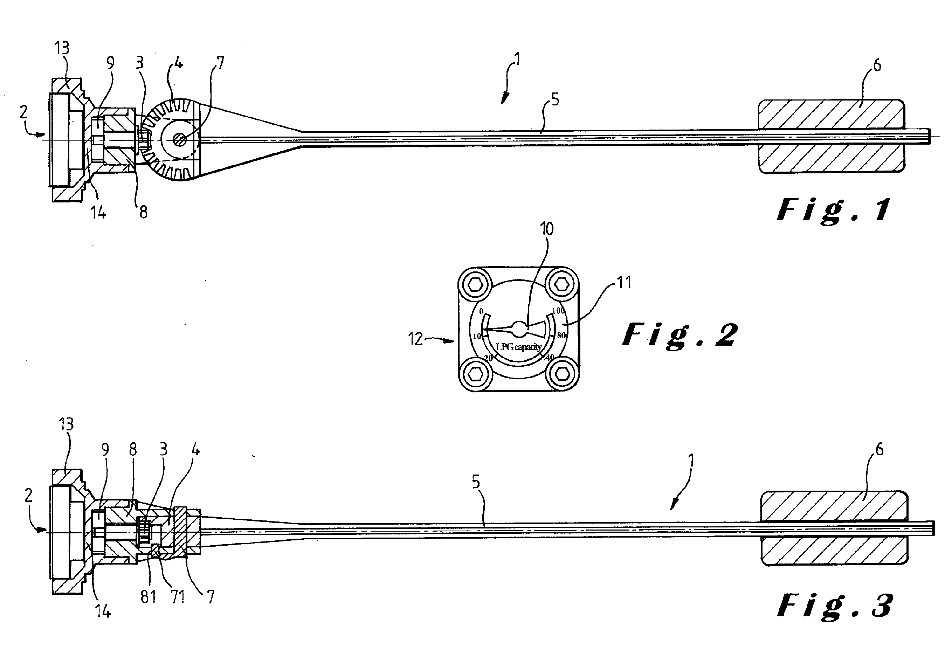

The gauge 1 shown in figure 1 comprises level indicating means 2, which are coupled to a first gear 3. The first gear 3 engages a second gear 4 in a substantially perpendicular way. The gears 3, 4 are maintained in position by means of a holder 8. This holder 8 is in turn mounted in a gauge head 13, on a side of the gauge head 13 opposite the level indicating means 2. To the second gear 4, a float arm 5 is coupled, on which a float 6 is mounted. The gauge 1 is provided for measuring the level of a liquid medium in a tank in that an angular displacement of the float arm 5 leads to a rotation of the first gear 3.

The position of the float 6 with respect to the second gear 4 is adjustable in that the float 6 is movably mounted on the float arm 5. The float arm is constructed in a cuttable material, preferably a plastic material, or any other cuttable material known to the person skilled in the art. In this way, the gauge 1 is adjustable to the dimensions of the tank in which it is to be mounted, by moving the float 6 along the float arm 5 and cutting off the excess length of the float arm 5.

The gauge 1 further comprises means for disengaging an re-engaging the first and second gears 3, 4. In the embodiments shown in figures 1 and 3, these disengaging/re-engaging means comprise a removable shaft 7. This shaft 7 is removably fixable to the holder 8, which holds the first and second gears 3, 4, by means of an extension 71 which can be plugged into a hole 81 in the holder. It is clear that the fixing of the shaft 7 to the holder 8 can be achieved in many other ways, known to the person skilled in the art. The second gear 4 is rotatably mounted on the shaft. By the removability of the shaft, the initial position of the second gear 4 and hence the float arm 5 with respect to the first gear 3 can be selected in function of the angle with respect to the horizontal plane in which the gauge 1 will be mounted in the tank.

Figure 3 clearly shows that the shaft 7 has a larger contact surface with the second gear 4 than with the holder 8. This construction of a fixed shaft on which the second gear is rotatably mounted is preferred over a rotatable shaft on which the second gear is fixed. The reason is that the construction of the fixed shaft, which is fixed to the holder, leads to a larger contact surface between rotating parts, namely the second gear 4 on the shaft 7. As a result, the friction occurring during rotation is spread over a larger surface, so that wearing off of the parts can be reduced and the life of the gauge 1 can be prolonged.

The first and second gears 3, 4, the holder 8, the shaft 7 and the float arm 5 are preferably constructed in a plastic material. The second gear 4 is preferably integrally moulded with the float arm 5. These parts may however also be constructed in any other material which is deemed suitable by the person skilled in the art.

In the embodiment shown in figures 1-3, the level indicating means 2 comprise a magnet 9 which is mechanically coupled to the first gear 3 and a needle 10 which is magnetically coupled to the magnet 9. By the magnetic coupling, the needle 10 rotates with the magnet 9, which in turn rotates as the float arm 5 is angularly displaced. As a result, the needle 10 can indicate the level in the tank on an indicator plate 11, which is mounted below the needle 10 (figure 2). The needle 10 and the indicator plate 11 are parts of an indicator clock 12, which is removably mounted in the gauge head 13. This has the advantage that the indicator clock 12 is easily replaceable by other indicating means, known to the person skilled in the art, such as for example electronic indicating means (not shown), for example comprising a transmitter on the gauge for transmitting a signal responsive of the level in the tank and a receiver on for example a dashboard of a vehicle for indicating the level in the tank to a driver. Furthermore, the removability of the level indicating means 2 has the advantage that they can be replaced when damaged and that the can be recycled for use in a new gauge when the old one becomes damaged.

In figures 1 and 3 it is shown that the indicator clock 12 and the magnet 9 are not mechanically connected to each other, but that they are separated by a portion 14 of the gauge head 13. This separating portion 14 can ensure that no liquid medium stored in the tank, in which the gauge 1 is mounted, can leak via the gauge 1.

The gear ratio of the second gear 4 with respect to the first gear is preferably larger than 1, more preferably about 25/7. In this way, an angular displacement of the float arm 5 causes a larger angular displacement of the needle 10, so that the sensitivity of the gauge 1 is increased.

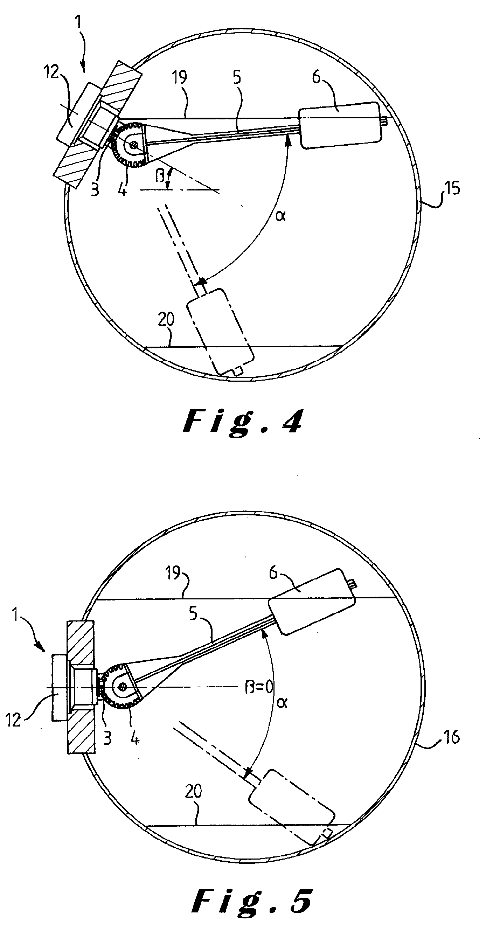

Figures 4-7 show that the gauge of the invention is suitable for use with a range of storage tanks 15-18. In these figures, the gauge 1 is each time mounted in a cylindrical tank for storing LPG. The gauge of the invention is however also suitable for use in tanks of any other shapes and for storing any other liquid medium known to the person skilled in the art.

In the embodiments of figures 4, 5 and 6, the gauge 1 of the invention is mounted in a plane parallel to the transverse direction of the tank 15-17, i.e. in a plane perpendicular to the axis of symmetry of the tank 15-17. As is commonly known for LPG tanks, it is sufficient that the gauge 1 can accurately measure a high level at which the tank is 80% full and a low level at which the tank is 5% full. As appears from the figures 4-6, the difference between these two levels corresponds to an angle α between two positions of the float arm 5 of the gauge 1. In the embodiments of figures 4, 5 and 6, the angle α is about 70°. This angle α slightly depends on the angle β in which the gauge is mounted in the wall of the tank 15-17 and on the diameter of the tank. Naturally, a change in the angle α affects the positions of the needle 10 of the indicator clock 12 at which the low and high levels are indicated, but it has been found that the dependency of the angle α is so small, that the same indicator clock 12 can be used with sufficient accuracy, irrespective of the angle β and the diameter of the tank 15-17.

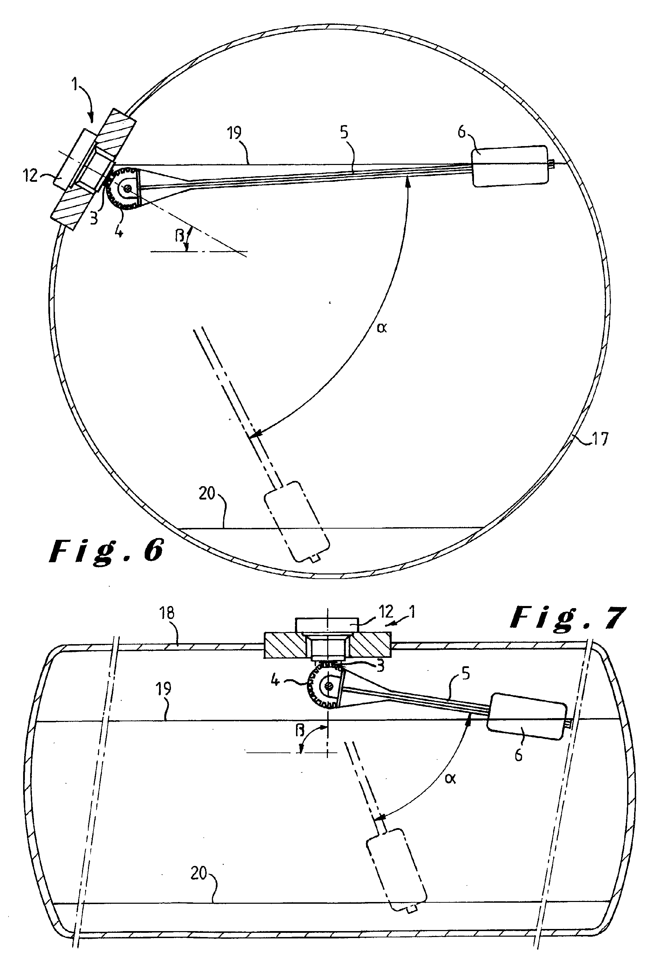

In the embodiment of figure 7, the gauge 1 of the invention is mounted in a plane parallel to the axis of symmetry of the tank 18, and the gauge head 13 is mounted in the top wall of the tank 18, i.e. the angle β is substantially 90°. In this embodiment, the length of the float arm 5 is preferably selected such that the angle α, which corresponds to the distance between the high and low levels 19, 20, is substantially equal to the angle α of the embodiments of figures 4-6, i.e. again about 70°. As a result, the same indicator clock 12 can be used. Selecting the length of the float arm 5 in this way also has the advantage that the float arm still forms an angle with the vertical plane at the low level 20. In this way, it can be avoided that the float arm 5 becomes stuck in its lower position.

In the embodiment of figure 7, the length of the float arm may however also be selected such that the angle α is wider, for example when higher accuracy of the level measurement is desired, or narrower. The different angle α would then of course require an indicator clock 12 with a different indicator plate 11 to adapt the gauge 1 to the increased or decreased angle α. The indicator clock 12 can however simply be replaced, as it is removably mounted on the gauge head 13.

## Claims

1. An adjustable gauge (1) for measuring the level of a liquid medium in a storage tank, comprising level indicating means (2) coupled to a first gear (3) and a float arm (5) coupled to a second gear (4), the first and second gears (3, 4) engaging each other perpendicularly, a float (6) being mounted on the float arm (5) of which the position with respect to the second gear (4) is adjustable, the level measurement being based on a rotation of the first gear (3) in response to a rotation of the second gear (4) following an angular displacement of the float arm (5), **characterised in that** the first gear (3) is located adjacent the level indicating means (2) and that the gauge (1) comprises means (7, 8, 71, 81) for disengaging and re-engaging the first and second gears (3, 4).

2. An adjustable gauge according to claim 1, **characterised in that** the disengaging/re-engaging means comprise a removable shaft (7) on which the second gear (4) is rotatably mounted, the shaft being removably fixable to a holder (8) for holding the first and second gears (3, 4), the shaft (7) having a larger contact surface with the second gear (4) than with the holder (8).

3. An adjustable gauge according to claim 2, **characterised in that** the shaft (7) and the holder (8) are constructed in a plastic material.

4. An adjustable gauge according to any one of the claims 1-3, **characterised in that** the float (6) is movably mounted on the float arm (5) and that the float arm is constructed in a cuttable material.

5. An adjustable gauge according to any one of the claims 1-4, **characterised in that** the second gear (4) has a gear ratio with respect to the first gear (3) which is larger than 1.

6. An adjustable gauge according to claim 5, **characterised in that** the gear ratio is about 25/7.

7. An adjustable gauge according to any one of the claims 1-6, **characterised in that** the level indicating means (2) comprise a magnet (9) which is mechanically coupled to the first gear (3) and a needle (10) which is magnetically coupled to the magnet (9).

8. An adjustable gauge according to any one of the previous claims, **characterised in that** the first gear (3), the second gear (4) and the float arm (5) are constructed in a plastic material, the float arm (5) being integrally moulded with the second gear (4).

9. An adjustable gauge according to any one of the previous claims, **characterised in that** the level indicating means (2) are replaceably mounted on the gauge (1).
